(19) Europäisches Patentamt
European Patent Office
Office européen des brevets

(11) **EP 1 590 210 B1**

(12) **EUROPÄISCHE PATENTSCHRIFT**

(45) Veröffentlichungstag und Bekanntmachung des Hinweises auf die Patenterteilung:
**09.04.2008 Patentblatt 2008/15**

(21) Anmeldenummer: **04708763.0**

(22) Anmeldetag: **06.02.2004**

(51) Int Cl.:
***B60R 21/0132*** (2006.01)

(86) Internationale Anmeldenummer:
**PCT/EP2004/001123**

(87) Internationale Veröffentlichungsnummer:
**WO 2004/069607 (19.08.2004 Gazette 2004/34)**

(54) **VERFAHREN UND VORRICHTUNG ZUM STEUERN EINES INSASSENSCHUTZMITTELS IN EINEM FAHRZEUG**

METHOD AND DEVICE FOR CONTROLLING OCCUPANT PROTECTION MEANS IN A VEHICLE

PROCEDE ET DISPOSITIF POUR COMMANDER UN SYSTEME DE PROTECTION DES OCCUPANTS D'UN VEHICULE

(84) Benannte Vertragsstaaten:
**DE ES FR GB IT**

(30) Priorität: **07.02.2003 DE 10305087**

(43) Veröffentlichungstag der Anmeldung:
**02.11.2005 Patentblatt 2005/44**

(73) Patentinhaber: **SIEMENS AKTIENGESELLSCHAFT**
**80333 München (DE)**

(72) Erfinder:
• **BRANDL, Jürgen**
**158-00086 Tokyo (JP)**
• **GRASSHOFF, Helge**
**158-0092 Tokyo (JP)**
• **KLOSS, Dieter**
**158-0086 Tokyo (JP)**
• **LO, Serigne**
**Minato-Ku, 108-0074 Tokyo (JP)**
• **WATANABE, Akinori**
**93049 Regensburg (DE)**

(56) Entgegenhaltungen:
WO-A-02/14113     DE-A- 19 534 760
US-A- 5 935 182     US-A- 6 036 225
US-A1- 2002 163 170     US-B1- 6 373 147

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft ein Verfahren und eine Vorrichtung zum Steuern eines Insassenschutzmittels in einem Fahrzeug. Dazu wird eine vom Aufprallsignal eines Aufprallsensors, vorzugsweise vom Beschleunigungssignal eines Beschleunigungsaufnehmers, abgeleitete erste Aufprallgröße mit einer ersten Auslöseschwelle verglichen. Außerdem wird eine auf andere Weise vom Aufprallsignal des Aufprallsensors abgeleitete zweite Aufprallgröße mit einer zweiten Auslöseschwelle verglichen. Das Insassenschutzmittel des Fahrzeugs wird nur dann ausgelöst, wenn sowohl der erste Auslöseschwellwert durch die erste Aufprallgröße und die zweite Auslöseschwelle durch die zweite Aufprallgröße überschritten wird.

Aus der US Patenschrift 5,935,182 ist eine Vorrichtung zum Ansteuern eines auslösbaren Insassenrückhaltemittels (28) durch ein Auslösesignal (120) bekannt. Das Auslösesignal (120) wird dann ausgegeben, wenn sowohl ein aus einem Beschleunigungssignal (40) eines Beschleunigungssensors (22) durch zweifache Integration gewonnenes Vorverlagerungssignal (x) einen zugehörigen Schwellwert (82) überschreitet und zusätzlich ein durch einfache Integration aus dem Beschleunigungssignal (40) gewonnenes Geschwindigkeitssignal ($\dot{x}$, 72) einen hierzu gehörigen Schwellwert (92) überschreitet.

Üblicherweise sind beispielsweise Beschleunigungssensoren zur Detektion von frontalen oder auch seitlichen Aufprallunfällen eines Kraftfahrzeugs in einem zentralen Steuergerät angeordnet, das zumeist am Fahrzeugtunnel befestigt ist und damit sehr nahe an den Fahrzeuginsassen. Der Beschleunigungssensor erfährt deshalb ungefähr die gleichen Beschleunigungen, die auch auf die Fahrzeuginsassen wirken.

Bei einem Aufprallunfall treten am Ort des Beschleunigungssensors dabei im allgemeinen jedoch positive und negative Beschleunigungen auf, die teilweise durch die auf das gesamte Fahrzeug beschleunigend einwirkende Kraft hervorgerufen werden, andernteils aber auch durch hochfrequente Schwingungen durch Verformungen der Fahrzeugkarosserie, beispielsweise Schallschwingungen im Fahrzeuglängsträger. Die hochfrequenten Schwingungen durch Materialverformungen während eines Aufprallunfalls haben im allgemeinen jedoch wenig Auswirkungen auf die Verletzungsschwere eines Fahrzeuginsassen, weshalb ein Beschleunigungssignal eines Beschleunigungssensors meist vor seiner eigentlichen Bewertung durch einen geeigneten Algorithmus tiefpassgefiltert wird. Das tiefpassgefilterte Beschleunigungssignal besteht jedoch auch weiterhin aus einem oszillierenden Signal mit positiven und negativen Signalamplituden, wobei die negativen Signalamplituden zumeist durch die auf das gesamte Kraftfahrzeug wirkende Verzögerung während des Aufprallunfalls hervorgerufen werden und die positiven Signalamplituden durch elastische und nicht elastische Verformungen der Fahrzeugkarosserie, beispielweise der Knautschzone, etc. Bei einem um 180 Grad verdreht eingebauten Beschleunigungssensor sind die Vorzeichen der Signalamplituden entsprechend vertauscht.

Durch die Amplituden beiderlei Vorzeichens im tiefpassgefilterten Beschleunigungssignal ergeben sich im Mittel niedrigere Amplituden der nachfolgend verschiedentlich integrierten Beschleunigungssignale, deren integrierte Werte gegen geeignete Schwellwerte verglichen werden sollen, beispielsweise die vom Beschleunigungssignal (40) des Beschleunigungssensors (22) der US Patentschrift 5,935,182 abgeleiteten integrierten und doppelt integrierten Signale ($\dot{x}$, x). Deshalb müssen auch die entsprechend geeigneten Schwellwerte (80, 92) niedrig gewählt werden, was die Sicherheit der Vorrichtung gegen Fehlauslösungen reduziert, da schon relativ geringe, wenig oszillierende Beschleunigungen zur Auslösung des Insassenschutzmittels führen können. Solche Beschleunigungen treten beispielsweise beim Anrutschen eines Kraftfahrzeugs gegen einen Bordstein auf oder auch bei einer Fahrt auf unebener Schotterstrasse.

Das Dokument DE 195 34 760 A1 offenbart eine Airbagsteuerung entsprechend den Merkmalen des Oberbegriffs des Anspruchs 1.

Das Dokument WO 02/14113 A1 offenbart ein Verfahren zur Bildung einer Auslöseentscheidung für Rückhaltemittel in einem Fahrzeug. Hierbei wird aus zeitlich versetzten Beschleunigungswerten die Differenz gebildet, welche integriert wird, wonach das Integral mit einem Schwellwert verglichen wird. Wenn das Integral nicht überschreitet, wird der Verlauf der Auslöseschwelle verändert.

Aufgabe der vorliegenden Erfindung ist es, die Ansteuerung eines Insassenschutzmittels in einem Kraftfahrzeug aufgrund verschiedentlich aus einem Aufprallsignal eines Aufprallsensors abgeleiteter Aufprallgrößen durch eine geeignete Auswahl der Aufprallgrößen möglichst sicher vor Fehlauslösungen zu gestalten.

Im Folgenden wird als Aufprallsensor und als Aufprallsignal wiederholt ein Beschleunigungssensor und ein damit einhergehendes Beschleunigungssignal erwähnt, ohne dass dies als eine Einschränkung für den allgemeineren Ausdruck Aufprallsensor bzw. Aufprallsignal missverstanden werden soll. Als Aufprallsensor kann ebenso eine andere Sensorart dienen, beispielsweise ein Drucksensor, der ein entsprechendes Drucksignal auszugeben vermag, oder ein Verbiegungssensor, der Deformationen von Fahrzeugbestandteilen erfasst, und so weiter.

Die Aufgabe wird gelöst durch ein Verfahren mit den Merkmalen gemäß Anspruch 1. Die Aufgabe wird weiterhin gelöst durch eine Vorrichtung zum Steuern eines Insassenschutzmittels in einem Kraftfahrzeug mit den Merkmalen gemäß Anspruch 4.

Das erfindungsgemäße Verfahren verwendet als erste Aufprallgröße den Absolutbetrag eines Beschleunigungssignals eines Beschleunigungssensors gemäß dem Oberbegriff des Anspruchs 1. Der Wert eines nachfolgend gebildeten Integrals aus dem Beschleunigungssignal über die Zeit wird dadurch im Mittel erhöht, wodurch ein höherer Schwellwert für die aus dem Absolutbetrag des Beschleunigungssignals hervorgehende erste Aufprallgröße gewählt werden kann und dadurch Fehlauslösungen erschwert werden. Ein weiterer Vorteil der Verwendung einer aus dem Absolutwert eines Beschleunigungssignals gebildeten ersten Aufprallgröße ist außerdem, dass bei der anschließenden Integralbildung auch die in den negativen Signalbereich oszillierenden Signalanteile des Beschleunigungssensors vorzeichenbereinigt mit den positiven Beschleunigungssignalen zum Wert des Integrals beitragen, so dass dieser Wert wesentlich schneller ansteigt als bei einem lediglich tiefpassgefilterten, vorzeichenbehafteten Beschleunigungssignal. Dadurch kann ggf. eine wesentlich schnellere Auslöseentscheidung herbeigeführt werden.

Bei der Integralbildung des Absolutbetrags des Beschleunigungssignals muss meist darauf geachtet werden, dass ein geeigneter Normierungsfaktor in der Berechnungsformel für das Integral mit berücksichtigt wird, damit das Zeitintegral nicht im Laufe der Zeit durch die gewählte Rechenoperation unphysikalisch hohe Werte annimmt. Zur Berechnung des Integrals über den Absolutbetrag des Aufprallsignals kann deshalb vorteilhafterweise folgende Formel gewählt werden:

$$AAA(T_1, T_2) = \frac{1}{T_2 - T_1} \int_{T_1}^{T_2} |a(t)| dt \quad , \tag{1a}$$

wobei AAA die erste Aufprallgröße bezeichnet und $T_1$ und $T_2$ den Beginn bzw. das Ende der Integration des Betrags der Beschleunigung a in Abhängigkeit von der Zeit t festlegen.

Es ist weiterhin von Vorteil, auch den Absolutbetrag des Beschleunigungssignals einer Tiefpassfilterung zu unterziehen, da auch im rein positiven Signalbereich hochfrequente Signaloszillationen, hervorgerufen beispielsweise durch hochfrequente Schallschwingungen im verformten Fahrzeugmaterial, die eine sinnvolle Signalauswertung des Aufprallsignals stören könnten. Alternativ kann auch eine Bandpassfilterung vorgesehen werden. Es ist selbstverständlich, dass eine solche Tiefpass- oder Bandpassfilterung auch schon vor der Bildung des Absolutbetrags des Beschleunigungssignals stattfinden kann, gegebenenfalls erfolgt eine Filterung des jeweiligen Signals sogar sowohl vor als nach der Integration.

Da die Integralbildung heutzutage zumeist in Mikrokontrollern erfolgt, muss die Berechnung von Integralwerten üblicherweise durch eine entsprechende Summation ersetzt werden, vorzugsweise nach folgender Formel:

$$AAA(t_n, b) = \frac{1}{b} \sum_{i=n-b}^{n} |a_i(t_i)| \cdot 1ms \quad , \tag{1}$$

wobei $t_n$ den Zeitpunkt der Bestimmung der ersten Aufprallgröße AAA bezeichnet und b+1 die Anzahl der berechneten Summenterme der einzelnen vorzeichenbereinigten Beschleunigungswerte $a_i$, i für den Summenindex der Summenbildung von i= n-b bis n steht und ms für die physikalische Einheit Millisekunden, die hier jedoch lediglich um der physikalischen Richtigkeit der Formel willen aufgeführt ist. Eine tatsächliche Berechnung der Formel (1) innerhalb eines Mikrokontrollers erfolgt im Allgemeinen einheitenlos und in den Zeitintervallen, die ein intern vorliegendes Taktsignal für die einzelnen Rechenschritte im Mikrokontroller vorgibt. Insofern gilt die obige Formel (1) für ein Rechentaktsignal mit einer Taktfrequenz von einem Kilohertz. Diese Nomenklatur soll im Weiteren beibehalten werden.

Um die oben angesprochene Tiefpassfilterung nach der auf diese Weise durchgeführten Integralberechnung durchzuführen, ist vorteilhafterweise eine entsprechend geeignete digitale Tiefpassfilterung vorzunehmen.

Die auf die vorliegende Weise gebildete erste Aufprallgröße wird in einer dazu geeigneten Auswerteeinheit, die üblicherweise in der zentralen Steuereinheit angeordnet ist, auf das Überschreiten eines ersten Schwellwerts hin überprüft. Nur wenn dieser erste Schwellwert durch die erste Aufprallgröße überschritten wird, und auch ein zweiter Schwellwert durch eine zweite Aufprallgröße überschritten wird, wird ein Insassenschutzmittel entsprechend angesteuert. Die Ansteuerung des Insassenschutzmittels ist dabei im einfachsten Falle eine Ansteuerung zur sofortigen Auslösung des Insassenschutzmittels, beispielsweise eines Gassacks. Ggf. wird das Insassenschutzmittel jedoch nicht allein aufgrund des Überschreitens der ersten und zweiten Auslöseschwelle durch die erste bzw. zweite Aufprallgröße sofort ausgelöst. Üblicherweise werden noch zusätzliche Auslösekriterien mit berücksichtigt. Dies kann zum einen das Überschreiten einer sogenannten Safing - Schwelle durch das Signal eines bereits aus der US-Patentschrift 6,036,225 bekannten Safing - Sensors sein. Weitere zusätzliche Auslösekriterien können auch Signale von Aufprallsensoreinheiten sein, die außerhalb des zentral angeordneten Insassenschutzsteuergeräts positioniert sind. Dies können beispielsweise sogenannte Drucksatelliten in den vorderen oder hinteren Fahrzeugtüren sein, die als auslöseentscheidendes Sensorsignal einen Druckanstieg in der sie jeweils umgebenden Seitentür an die zentrale Steuereinheit melden können, aber auch entsprechend an den Seiten des Kraftfahrzeugs angeordnete Beschleunigungssensoren, die seitliche Beschleunigungen an das zentrale Steuergerät melden können, oder auch Beschleunigungs-/ oder Drucksensoreinheiten außerhalb der zentralen Steuereinheit, die entweder im Heck oder im Motorraum des Kraftfahrzeugs angeordnet sind und von dort Beschleunigungssignale bzw. Drucksignale an das zentrale Steuergerät liefern.

Zur Bereitstellung einer ggf. auslöseentscheidenden zweiten Aufprallgröße zusätzlich zu der bereits beschriebenen ersten Aufprallgröße dient erfindungsgemäß aber das Aufprallsignal des gleichen Aufprallsensors, wobei die zweite Aufprallgröße jedoch auf unterschiedliche Weise vom vorliegenden Aufprallsignal abgeleitet wird als die erste Aufprallgröße.

Es wird als zweite Aufprallgröße die Summe aus mehreren Differenztermen jeweils zweier zeitlich aufeinanderfolgender Digitalwerte der ersten Aufprallgröße gebildet entsprechend folgender Formel:

$$wj(t_n,b) = \sum_{i=n-b}^{n} \left( AAA_i(t_i,b) - AAA_{i-1}(t_{i-1},b) \right) \quad . \tag{2}$$

Die auf diese Weise berechnete zweite Aufprallgröße wj gibt somit eine Änderung des mittleren, auf den Fahrzeuginsassen wirkenden Beschleunigungsbetrags während eines begrenzten Beobachtungszeitraums $t_{n-b-1}$-$t_{n-1}$ wieder. Folglich gibt die Aufprallgröße wj ein Maß für die auf einen Fahrzeuginsassen wirkende Kraft während des Beobachtungszeitrahmens zur weiteren Auswertung des Fahrzeugunfalls an die Hand.

Die erfindungsgemäße Vorrichtung weist einen Beschleunigungsaufnehmer zum Erfassen von Beschleunigungen während eines Fahrzeugaufpralls auf und mehrere, mindestens jedoch zwei, mit dem Beschleunigungsaufnehmer verbundenen Beschleunigungssignalaufbereitungseinheiten zur Umwandlung des vom Beschleunigungsaufnehmer erzeugten Beschleunigungssignals in mehrere, insbesondere jedoch zwei, Aufprallgrößen. Der jeweilige Signalausgang einer Beschleunigungssignalaufbereitungseinheit ist mit einer Auswerteeinheit zur Bewertung der ihr zugeführten Aufprallgrößen verbunden. Die Ausgabe eines Auslösesignals an eine mit der Auswerteeinheit verbundenen Auslöseeinheit des Insassenschutzmittels erfolgt erfindungsgemäß nur dann, wenn mindestens zwei Aufprallgrößen eine jeweilige Auslöseschwelle überschreiten. Entscheidend für die erfindungsgemäße Vorrichtung ist es dabei, dass die erste Beschleunigungssignalaufbereitungseinheit eine Absolutbetragsbildungseinheit aufweist, der eingangsseitig das Beschleunigungssignal des Beschleunigungssensors zugeführt ist und an deren Signalausgang ein Absolutbetrag des erfassten Beschleunigungssignals vorliegt. Dieser Absolutbetrag wird der Auswerteeinheit direkt oder nach einer weiteren Aufbereitung als erste Aufprallgröße zugeführt.

Zur Erzeugung der zweiten Aufprallgröße in der zweiten Beschleunigungssignalaufbereitungseinheit ist es von Vorteil, dass die zweite Beschleunigungssignalaufbereitungseinheit ein Halteglied und ferner eine logische Addierer-/ Subtrahierereinheit mit drei Signaleingängen aufweist. Ein erster Signaleingang der Addierer-/Subtrahierereinheit ist mit dem Signalausgang des Halteglieds verbunden, das die an dessen Signaleingang unmittelbar anliegende erste Aufprallgröße um eine Zeit verzögert, und zwar üblicherweise um die Zeit zwischen zwei internen Rechentaktsignalen der erfindungsgemäßen Vorrichtung. Ein zweiter Signaleingang der Addierer-/Subtrahierereinheit ist unmittelbar mit der ersten Aufprallgröße beaufschlagt. Die logische Addierer-/Subtrahierereinheit erzeugt aus den beiden zugeführten Signalen eine Differenz zweier zeitlich aufeinanderfolgender Digitalwerte der ersten Aufprallgröße. Der Signalausgang der Addierer-/Subtrahierereinheit wird zurückgeführt auf einen dritten Signaleingang der Addierer-/Subtrahierereinheit, dessen nacheinender anliegenden Signalwerte addiert werden, so dass nach einer anfänglichen Hochlaufphase der erfindungsgemäßen Vorrichtung am Signalausgang der Addierer-/Subtrahierereinheit als zweite Aufprallgröße eine Summe mehrerer Differenzterme jeweils zweier zeitlich aufeinanderfolgender Digitalwerte der ersten Aufprallgröße zur Verfügung steht, beispielsweise entsprechend der oben genannten Formel (2).

An dieser Stelle sei nochmals darauf hingewiesen, dass das Überschreiten eines ersten und zweiten Schwellwerts durch die erste bzw. zweite Aufprallgröße nicht zwingend zu einer sofortigen Auslösung eines geeigneten Insassenschutzmittels führen muss. Das Überschreiten dieser Schwellwerte kann auch dazu verwendet werden, die Unfallschwere der tatsächlichen Auslösung eines Insassenschutzmittels festzustellen, was bei der weiteren Auswertung dieser oder auch anderer Aufprallgrößen mit berücksichtigt wird. Beispielsweise kann es von Vorteil sein, bei einer weiteren Auswertung verschiedener Aufprallgrößen das Maß der Vorverlagerung des Fahrzeuginsassen mit zu berücksichtigen und erst bei Überschreiten eines weiteren Paars aus einem ersten und zweiten Schwellwert durch eine entsprechende erste und zweite Aufprallgröße lediglich eine erste Aufblasstufe eines Gassacks zu veranlassen, so dass ein Fahrzeuginsasse, der bereits während des Unfallverlaufs sehr weit nach vorne verlagert wurde, nicht zusätzlich durch den sich schnell entfaltenden Gassack verletzt wird. Andererseits kann eine festgestellte nur sehr geringe Vorverlagerung eines Fahrzeuginsassen während der Anfangsphase eines Aufprallunfalls beispielsweise dazu dienen, sehr schnell sowohl eine erste, zweite und möglicherweise sogar eine dritte Aufblasstufe eines Gassacks zu zünden. Dieser Fall tritt beispielsweise dann auf, wenn ein Fahrzeuginsasse durch ein weiteres Insassenschutzmittel, beispielsweise einen Gurtstraffer, in der Anfangsphase eines Aufprallunfalls bereits sehr stark zurückgehalten wird und deshalb ein relativ großer Ausbreitungsraum zwischen dem Auslösemodul des Gassacks und der Fahrzeugarmatur und dem Fahrzeuginsassen durch den Gassack gefüllt werden muss, damit der Fahrzeuginsasse bestimmungsgemäß sanft durch das Gaskissen abgebremst wird.

Ebenso können alle vorliegend angegebenen Arten zur Berechnung einer zweiten Aufprallgröße auch alle gleichzeitig in Kombination mit der ersten Aufprallgröße verwendet werden, um ein geeignetes Insassenschutzmittel entsprechend anzusteuern. Gleichwohl sind auch verschiedentliche Kombinationen der einzelnen, unterschiedlich ermittelten zweiten Aufprallgrößen möglich, um entsprechend als Auslösekriterium oder als Kriterium zur Anpassung der Auslösestrategie des Insassenschutzmittels zu dienen.

Die Erfindung wird nachfolgend anhand verschiedener Ausführungsbeispiele des erfindungsgemäßen Verfahrens, bzw. der erfindungsgemäßen Vorrichtung dargestellt. Es zeigen

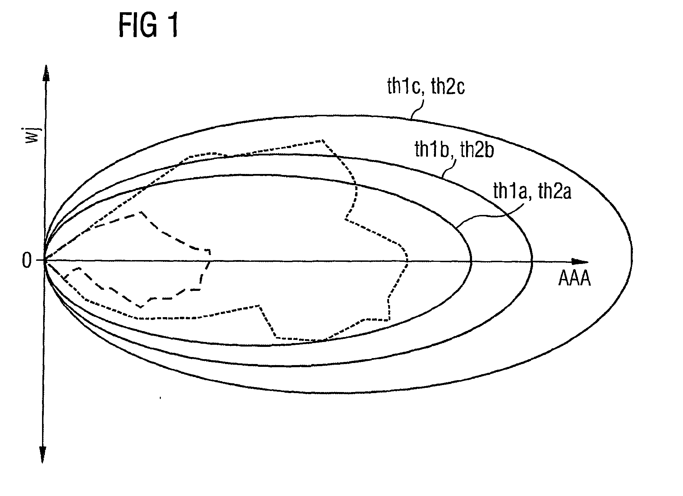

Figur 1        eine schematische Auftragung einer ersten Aufprallgröße AAA gegen eine zweite Aufprallgröße wj zur Ansteuerung eines Insassenschutzmittels entsprechend einem Aufprallunfall größerer Schwere (punktiert) und einem Aufprallunfall kleinerer Schwere (strichiert) und, davon abhängig, , mit durchgehender Linie eingezeichnet, ein Verlauf erster und zweiter Schwellwerte für eine erste Zündstufe th1a und th2a, für eine zweite Zündstufe th1b und th1b und eine dritte Zündstufe th1c und th2c eines Insassenschutzmittels,

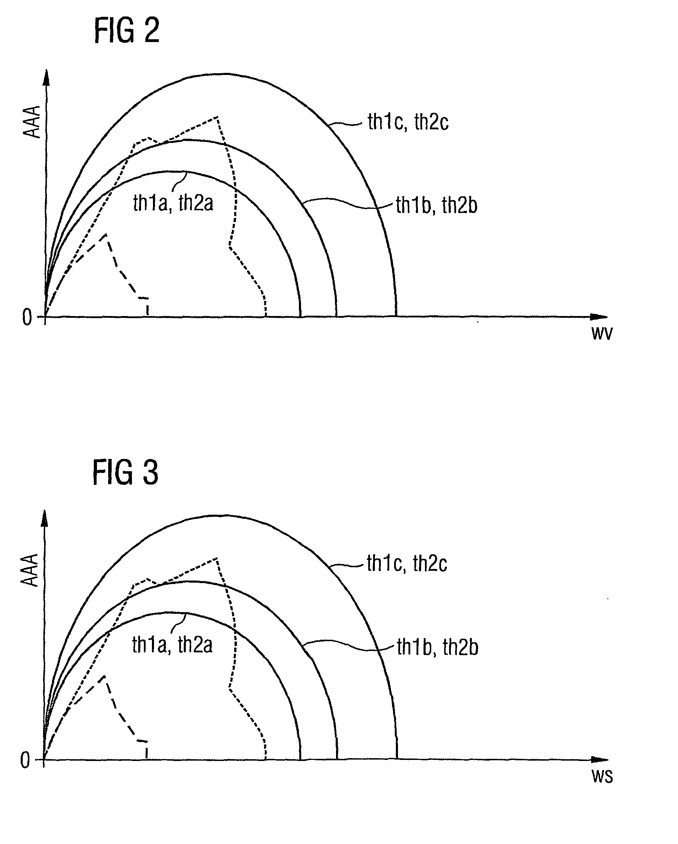

Figur 2        eine Auftragung der ersten Aufprallgröße AAA über einer zweiten Aufprallgröße wv zur Ansteuerung eines Insassenschutzmittels entsprechend einem Aufprallunfall größerer Schwere (punktiert) und einem Aufprallunfall kleinerer Schwere (strichiert) und, davon abhängig, mit durchgehender Linie eingezeichnet, den Verlauf des ersten und zweiten Schwellwerts einer ersten Auslösestufe th1a, th2a, einer zweiten Auslösestufe th1b, th2b und einer dritten Auslösestufe th1c, th2c eines Insassenschutzmittels,

Figur 3        eine Auftragung entsprechend der Auftragung der Figur 2, wobei auf der Rechtswertachse eine im Vergleich zur Figur 2 auf unterschiedliche Weise berechnete zweite Aufprallgröße ws aufgetragen ist,

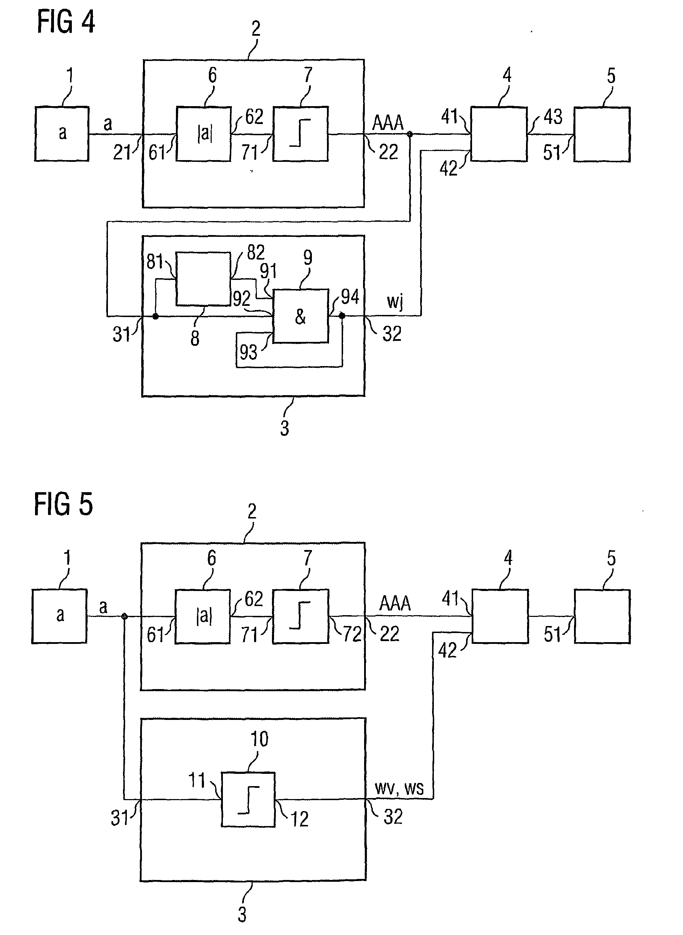

Figuren 4        und 5 eine erfindungsgemäße Vorrichtung zur Verwendung in einem erfindungsgemäßen Verfahren.

Figur 1 zeigt eine Auftragung einer ersten Aufprallgröße AAA auf einer Ordinate und einer zweiten Aufprallgröße wj auf einer Abszisse eines schematischen Diagramms, dargestellt sowohl für einen Aufprallunfall von geringer Unfallschwere (strichiert) als auch für einen Aufprallunfall mit großer Aufprallschwere (punktiert). Die aufgetragene erste Kenngröße AAA ist, wie bereits weiter oben erwähnt, entsprechend einer der Formeln (1a) oder (1) gebildet und stellt deshalb einen zeitlich begrenzten Integralwert des Absolutbetrages des Signals eines Beschleunigungsaufnehmers 1 dar. Dieser Wert gibt einer Auswerteeinheit 4 eine entscheidende Information darüber, welche Beschleunigungen im Mittel während eines Beobachtungszeitraums, in Formel (1a) angegeben als Zeitfenster $T_2$-$T_1$, auf einen Fahrzeuginsassen während eines Aufprallunfalls einwirken. Entsprechend den unterschiedlichen Unfallschweren der dargestellten Aufprallereignisse treten höhere Werte für die erste Aufprallgröße AAA bei größerer Unfallschwere auf, dargestellt als punktierte Aufprallgrößenkurve, als im Falle des leichteren Unfalls, gekennzeichnet durch den strichiert eingezeichneten Kurvenverlauf.

Die auf der Abszisse aufgetragenen Werte der zweiten Aufprallgröße wj sind entsprechend der bereits erwähnten Formel (2) gebildet und stellen somit eine mittlere Änderung der ersten Aufprallgröße AAA während eines begrenzten Zeitfensters dar, in der Formel (2) angegeben als Zeitdifferenz $t_{n-b-1}$-$t_{n-1}$. Entsprechend stellt dieser Wert eine Änderung des mittleren Absolutbetrags des Beschleunigungssignals a dar, die Auskunft über die auf einen Fahrzeuginsassen wirkende Kraft während des Beobachtungszeitrahmens gibt. Entsprechend ist auch bei dem schwereren Unfallverlauf der punktiert eingezeichneten Aufprallgrößenkurve ein Auftreten von höheren Werten der zweiten Aufprallgröße wj auszumachen als bei der strichiert eingezeichneten Aufprallgrößenkurve.

Jeweils mit durchgehender Linie eingezeichnet ist der Verlauf von Paaren jeweils eines ersten und zweiten Schwellwerts th1a und th2a, th1b und th2b, th1c und th2c für die beiden Aufprallgrößen AAA und wj. Der Verlauf der niedrigsten ersten und zweiten Schwellwerte th1a, th2a ist in Figur 1 schematisch als kleinstes geschlossenes Oval th1a, th2a eingezeichnet. Nur die punktierte Aufprallgrößenkurve verlässt die Fläche, die von der kleinsten Schwellwertlinie th1a, th2a eingeschlossen wird. Dies kann die Auswerteeinheit dazu verwenden, sofort ein Insassenschutzmittel auszulösen. Alternativ kann jedoch auch lediglich eine erste Stufe eines mehrstufig auslösbaren Insassenschutzmittels ausgelöst oder eine gemäß der festgestellten Unfallschwere modifizierte Auslösestrategie gewählt werden.

Im Falle der strichiert eingezeichneten Aufprallgrößenkurve wird die erste Schwellwertlinie th1a, th2a der ersten und zweiten Schwellwerte th1a und th2a nicht überschritten. Es handelt sich offenbar um einen Verlauf der Aufprallgrößenkurve, der weder zur Auslösung eines Insassenschutzmittels führen soll, noch überhaupt auf eine Unfallsituation hinweist.

Das nach dem kleinsten Oval th1a, th2a nächstgrößere eingezeichnete Oval th1b, th2b stellt die zweite Schwellwertlinie th1b, th2b von ersten und zweiten Schwellwerten th1b und th2b dar. Auch diese zweite Schwellwertlinie th1b, th2b wird durch die punktiert eingezeichnete Aufprallgrößenkurve überschritten. Da dies auf eine große Unfallschwere hinweist, könnte die Auswerteeinheit 4 neben einer ersten auch gleich eine zweite Auslösestufe des Insassenschutzmittels zünden, beispielsweise könnte ein Gassack vollständig mit Gas befüllt werden, um den Zwischenraum zwischen der Montageposition des Gassacks in der Fahrzeugarmatur und dem Fahrzeuginsassen schnellstmöglich durch einen möglichst prallen Gassack zu füllen, um so die hohen Beschleunigungen abzufangen, die der Fahrzeuginsasse während des Aufprallunfalls erfährt.

Als drittes und größtes Oval th1c, th2c ist eine dritte Schwellwertlinie th1c, th2c eines dritten Paars von ersten und zweiten Schwellwerten th1c und th2c in der Figur 1 eingezeichnet. Keine der beiden Aufprallgrößen wj und AAA überschreitet den jeweils zugehörigen Schwellwert th1c oder th2c. Entsprechend verlässt keine der beiden Aufprallgrößenkurven (punktiert oder strichiert) die Innenfläche dieses größten Ovals th1c, th2c. Eine möglicherweise zu zündende dritte Auslösestufe eines Insassenschutzmittels würde in diesem Fall nicht veranlasst. Auch ein Kriterium für eine größtmögliche Unfallschwere wäre in diesem Fall nicht erreicht, so dass in diesem Fall die Auslösestrategie des Insassenschutzmittels nicht weiter verändert werden müsste.

Es ist anzumerken, dass es für das erfindungsgemäße Verfahren unerheblich ist, welche Art der Auftragung für die hier vorliegende Erläuterung des erfindungsgemäßen Verfahrens gewählt wird. Es könnten in der Figur 1 auf der Ordinate ebenso die Werte der zweiten Aufprallgröße wj aufgetragen sein und auf der Abszisse die Werte der ersten Aufprallgröße AAA. Entscheidend für das erfindungsgemäße Verfahren ist lediglich eine Bewertung eines Aufprallunfalls mit Hilfe der ersten Aufprallgröße AAA und einer im Vergleich zu dieser auf unterschiedliche Weise aus dem Aufprallsignal a des Aufprallsensors 1 abgeleiteten zweiten Aufprallgröße, beispielsweise mit einer der hier offenbarten zweiten Aufprallgrößen wj, wv oder ws.

Figur 2 zeigt im Wesentlichen eine Auftragung entsprechend der Figur 1. Jedoch wurde hier eine Auftragung der ersten Aufprallgröße AAA auf der Abszisse gewählt, während auf der Ordinate die Werte der zweiten Aufprallgröße wv aufgetragen wurden.

Die zweite Aufprallgröße wv wird aus einem zeitlich begrenzten Integral des vorzeichenbehafteten Aufprallsignals a eines Aufprallsensors 1 nach einer der Formeln (3a) oder (3) gebildet. Entsprechend handelt es sich bei der zweiten Aufprallgröße wv um einen Geschwindigkeitswert des Fahrzeuginsassen während eines begrenzten Beobachtungszeitfensters. Aus diesem Grund treten im Verlauf der gezeigten Aufprallgrößenkurve für einen schweren Aufprallunfall (punktiert) und für einen leichten Aufprallunfall (strichiert) keine Werte der zweiten Aufprallgröße wv unterschiedlichen Vorzeichens auf, da eine Geschwindigkeitsänderung in solchen Fällen im Allgemeinen nur in einer Richtung erfolgt, nämlich in der Richtung der Fahrzeugverzögerung.

Überschreitet ein Werte - Paar von aufgetragenen Aufprallgrößen AAA und wv eine Schwellwertlinie th1a/b/c, th2a/b/c, gebildet aus ersten und zweiten Schwellwerten th1a und th2a, th1b und th2b sowie th1c und th2c, so werden in der Auswerteeinheit 4 entsprechend angepasste Maßnahmen zur Ansteuerung des angeschlossenen Insassenschutzmittels veranlasst, wie dies schon anhand der Figur 1 erläutert wurde.

Figur 3 zeigt eine Auftragung der ersten Aufprallgröße AAA auf der Abszisse gegen Werte der zweiten Aufprallgröße ws auf der Ordinate. Dabei ist der Wert der zweiten Aufprallgröße ws der Figur 3 gebildet nach einer der weiter oben angegebenen Formeln (4a) oder (4) und stellt somit ein Doppelintegral des vorzeichenbehafteten Aufprallsignals a des Aufprallsensors 1 dar, was folglich ein Maß für die Vorverlagerung eines Fahrzeuginsassen aufgrund der ihm widerfahrenen Beschleunigungen während eines Aufprallunfalls angibt.

Wie in den Figuren 1 und 2 bewirkt auch in der Figur 3 ein Überschreiten einer der Schwellwertlinien th1a/b/c, th2a/b/c der ersten und zweiten Schwellwerte th1a und th2a, th1b und th2b, th1c und th2c, dass die Auswerteeinheit 4 eine entsprechend an die Unfallschwere angepasste Auslösestrategie des Insassenschutzmittels veranlasst.

Figur 4 zeigt eine erfindungsgemäße Vorrichtung zur Verwendung in einem erfindungsgemäßen Verfahren.

Ein Beschleunigungssensor 1 gibt sein Beschleunigungssignal a an den Signaleingang 21 einer ersten Beschleunigungssignalaufbereitungseinheit 2, in der das Beschleunigungssignal a direkt an den Signaleingang 61 einer Absolutbetragbildungseinheit 6 geführt wird. Dort wird das Beschleunigungssignal a vorzeichenbereinigt, d.h. es wird ein Absolutbetrag des Beschleunigungssignals a erzeugt.

Der Signalausgang 62 der Absolutbetragsbildungseinheit 6 ist mit dem Signaleingang 71 einer Integriereinheit 7 verbunden, in der der Absolutbetrag des Beschleunigungssignals a während eines begrenzten Beobachtungszeitraums integriert wird, und zwar entsprechend einer der vorgenannten Formeln (1a) oder (1). Dieser Wert wird am Signalausgang 72 der Integriereinheit 7 als erste Aufprallgröße AAA an den Signalausgang 22 der Beschleunigungssignalaufbereitungseinheit 2 ausgegeben.

Der Signalausgang 22 der Beschleunigungssignalaufbereitungseinheit 2 ist sowohl mit dem Signaleingang 41 der Auswerteinheit 4 verbunden als auch mit dem Signaleingang 31 der zweiten Beschleunigungssignalaufbereitungseinheit 3. Von dort wird die Aufprallgröße AAA sowohl an den Signaleingang 81 eines Haltegliedes 8 geführt als auch an einen zweiten Signaleingang 92 einer Addierer-/Subtrahierereinheit 9. Der Signalausgang 82 des Haltegliedes 8 ist mit einem ersten Eingang 91 der Addierer-/Subtrahierereinheit 9 verbunden.

Das Halteglied 8 hat die Aufgabe, Werte $AAA_i$ der ersten Aufprallgröße AAA um eine Taktperiode eines internen Taktsignals zu verzögern. Der Wert $AAA_i$ der Aufprallgröße AAA ohne zwischengeschaltetes Halteglied 8, der direkt an den zweiten Eingang 92 der Addierer-/Subtrahierereinheit 9 geführt ist, wird hingegen nicht verzögert. In der Addierer-/Subtrahierereinheit 9 wird zunächst ein Differenzterm $AAA_i - AAA_{i-1}$ zweier zeitlich aufeinanderfolgender Werte $AAA_i$, $AAA_{i-1}$ der Aufprallgröße AAA gebildet.

Zugleich ist der Signalausgang 94 der Addierer-/Subtrahierereinheit 9 mit einem dritten Signaleingang 93 der Addierer-/Subtrahierereinheit verbunden. Im Normalbetrieb der erfindungsgemäßen Vorrichtung liegt am Signalausgang 94 der Addierer-/Subtrahierereinheit 9 eine Summe der Differenzterme $AAA_i - AAA_{i-1}$ vor.

Die Summe von Differenztermen $AAA_i - AAA_{i-1}$ jeweils zweier hintereinanderfolgender Einzelwerte $AAA_i$ und $AAA_{i-1}$ wird an den Signalausgang 32 der zweiten Beschleunigungssignalaufbereitungseinheit 3 als zweite Aufprallgröße wj und von dort an den zweiten Signaleingang 42 der Auswerteinheit 4 weitergeleitet.

In der Auswerteinheit 4 erfolgt die Bewertung der beiden zugeführten Aufprallgrößen AAA und wj, woraufhin eine an die Auswerteinheit 4 angeschlossenen Auswerteeinheit 5 entsprechend angesteuert wird, was bereits weiter oben schon ausführlich beschrieben wurde.

Figur 5 zeigt eine ähnliche Anordnung wie die der Figur 4 mit dem Unterschied, dass in der zweiten Beschleunigungssignalaufbereitungseinheit 3 nun eine Integriereinheit 10 angeordnet ist, die eingangsseitig mit dem Signaleingang 31 und ausgangsseitig mit dem Signalausgang 32 der zweiten Beschleunigungssignalaufbereitungseinheit 3 verbunden ist. Im Unterschied zur Anordnung der Figur 4 ist dem Signaleingang 31 der Beschleunigungssignalaufbereitungseinheit das Beschleunigungssignal a direkt zugeführt.

Die Integriereinheit 10 erzeugt eine zweite Aufprallgröße wv am Signalausgang 32 der Beschleunigungsaufbereitungseinheit 3 als ein einfaches Integral des Beschleunigungssignals a, das gemäß einer der oben genannten Formeln (3a) oder (3) gebildet ist.

Alternativ handelt es sich bei der Integriereinheit 10 um eine Doppelintegriereinheit, die zum einen das vorzeichenbehaftete Beschleunigungssignal a fortlaufend integriert oder addiert und des Weiteren das Ergebnis während eines begrenzten Zeitfensters (von $T_1$ bis $T_2$) gemäß der Formel (4a) ein zweites mal integriert oder, der Anwendung in einem Mikrokontroller entsprechend, durch eine Summenbildung gemäß der oben genannten Formel (4) berechnet. Entsprechend stellen die zweiten Aufprallgrößen wv und ws entweder ein Maß für die Relativgeschwindigkeit eines Insassen während eines Fahrzeugaufpralls dar (zweite Aufprallgröße wv) oder ein Maß für seine relative Vorverlagerung (zweite Aufprallgröße ws).

Analog zur Figur 4 wird eine zweite Aufprallgröße wv oder ws der Auslöseeinheit 4 zugeführt, in der im Zusammenspiel mit der ersten Aufprallgröße AAA ggf. eine entsprechende Anpassung des Auslöseverhaltens eines Insassenschutzmittels während des Aufprallunfalls erfolgt.

**Patentansprüche**

**1.** Verfahren zum Steuern eines Insassenschutzmittels in einem Fahrzeug,

- bei dem ein Beschleunigungsaufnehmer (1) ein Beschleunigungssignal (a) liefert,
- bei dem eine aus dem Beschleunigungssignal abgeleitete erste Aufprallgröße (AAA) mit einer ersten Auslöseschwelle (th1a, th1b, th1c) verglichen wird,
- bei dem eine aus dem Beschleunigungssignal (a) abgeleitete zweite Aufprallgröße (wj, wv, ws) mit einer zweiten Auslöseschwelle (th2a, th2b, th2c) verglichen wird,
- bei dem das Insassenschutzmittel gesteuert wird in Abhängigkeit vom Überschreiten der ersten und zweiten Auslöseschwelle (th1a, th1b, th1c, th2a, th2b, th2c) und
- bei dem die erste Aufprallgröße (AAA) aus dem Absolutbetrag des Beschleunigungssignals (a) abgeleitet wird,

**dadurch gekennzeichnet, dass**
die zweite Aufprallgröße (wj) aus einer Summe mehrerer Differenzterme jeweils zweier zeitlich aufeinanderfolgender Digitalwerte ($AAA_i$) der ersten Aufprallgröße (AAA) gebildet wird, vorzugsweise entsprechend folgender Formel:

$$wj(t_n, b) = \sum_{i=n-b}^{n} \left( AAA_i(t_i, b) - AAA_{i-1}(t_{i-1}, b) \right) .$$

(2)

wobei $t_n$ der Zeitpunkt der Bestimmung der ersten Aufprallgröße (AAA) ist, b+1 die Anzahl der Summenterme, i ein Summenindex für die Summenbildung von i = n - b bis n ist.

2. Verfahren nach Anspruch 1,
**dadurch gekennzeichnet, dass**
die erste Aufprallgröße (AAA) aus einem Integral des Absolutbetrags des Aufprallsignals (a) über einen begrenzten Zeitraum abgeleitet wird, vorzugsweise aus einer Summe von zeitlich aufeinanderfolgenden Digitalwerten ($a_i$) des Absolutbetrags des Aufprallsignals (a) nach folgender Formel:

$$AAA(t_n, b) = \frac{1}{b} \sum_{i=n-b}^{n} \left| a_i(t_i) \right| \cdot 1ms ,$$

(1)

wobei $t_n$ der Zeitpunkt der Bestimmung der ersten Aufprallgröße (AAA) ist, b+1 die Anzahl der Summenterme, i ein Summenindex für die Summenbildung von i = n-b bis n ist und ms für die physikalische Einheit Millisekunden steht.

3. Verfahren nach einem der Ansprüche 1 oder 2,
**dadurch gekennzeichnet, dass**
die erste Aufprallgröße (AAA) als tiefpassgefilterter Digitalwert vorliegt.

4. Vorrichtung zum Steuern eines Insassenschutzmittels in einem Fahrzeug nach einem der vorgenannten Verfahren, mit

- einem Beschleunigungsaufnehmer (1) zum Erfassen von Beschleunigungen während eines Fahrzeugaufpralls,
- mehreren, mit dem Beschleunigungsaufnehmer (1) verbundenen Beschleunigungssignalaufbereitungseinheiten (2, 3) zur Umwandlung des vom Beschleunigungsaufnehmer (1) erzeugten Beschleunigungssignals (a) in mehrere Aufprallgrößen (AAA, wj; wv, ws),
- einer mit dem Signalausgang (22, 32) jeder der Beschleunigungssignalaufbereitungseinheiten (2,3) verbundenen Auswerteeinheit (4) zur Bewertung der ihr zugeführten Aufprallgrößen (AAA, wj; wv, ws) und zur Ausgabe eines Auslösesignals an eine Auslöseeinheit (5) des Insassenschutzmittels, wenn mindestens zwei Aufprallgrößen (AAA, wj; wv, ws) eine jeweilige Auslöseschwelle (th1a,th1b,th1c, th2a,th2b,th2c) überschreiten, wobei
- eine erste Beschleunigungssignalaufbereitungseinheit (2) eine Absolutbetragbildungseinheit (6) aufweist, der eingangsseitig das Beschleunigungssignal (a) zugeführt ist und an deren Signalausgang (62) ein Absolutbetrag des erfassten Beschleunigungssignals (a) vorliegt,
- der Signalausgang (62) der Absolutbetragsbildungseinheit (6) dem Signalausgang (22) der ersten Beschleunigungssignalaufbereitungseinheit (2) zugeführt ist,
- am Signalausgang (22) der ersten Beschleunigungssignalaufbereitungseinheit (2) die erste Aufprallgröße (AAA) zur Verfügung steht und
- das Beschleunigungssignal (a) des Beschleunigungsaufnehmers (1) mit dem Signaleingang (31) einer zweiten Beschleunigungssignalaufbereitungseinheit (3) verbunden ist, an deren Signalausgang (32) eine von dem Beschleunigungssignal (a) abgeleitete zweite Aufprallgröße (wj; wv, ws) vorliegt, die einem zweiten Signaleingang (42) der Auswerteeinheit (4) zugeführt ist,

**dadurch gekennzeichnet, dass**

- die zweite Beschleunigungssignalaufbereitungseinheit (3) ein Halteglied (8) und ferner eine logische Addierer-/Subtrahierereinheit (9) mit einem ersten, zweiten und dritten Signaleingang (91, 92, 93) aufweist,
- der Signaleingang (81) des Halteglieds (8) unmittelbar mit der ersten Aufprallgröße (AAA) beaufschlagt ist,
- der Signalausgang (82) des Halteglieds (8) mit dem ersten Signaleingang (91) der Addierer-/Subtrahlererein-

heit (9) verbunden ist,
- der zweite Signaleingang (92) der Addierer-/Subtrahierereinheit (9) unmittelbar mit der ersten Aufprallgröße (AAA) beaufschlagt ist und
- der Signalausgang (94) der Addierer-/Subtrahierereinheit (9) sowohl mit dem Signalausgang (32) der zweiten Beschleunigungssignalaufbereitungseinheit (3) als auch mit dem dritten Signaleingang (93) der Addierer-/Subtrahierereinheit (9) verbunden ist, so dass am Signalausgang (32) der zweiten Beschleunigungsaufbereitungseinheit (3) die zweite Aufprallgröße (wj) als eine Summe mehrerer Differenzterme jeweils zweier zeitlich aufeinanderfolgender Digitalwerte (AAA$_i$) der ersten Aufprallgröße (AAA) zur Verfügung steht, vorzugsweise entsprechend der Formel

$$(2) \quad wj(t_n, b) = \sum_{i=n-b}^{n} \left( AAA_i(t_i, b) - AAA_{i-1}(t_{i-1}, b) \right).$$

## Claims

1. Method for controlling an occupant protection means in a motor vehicle,

    - in which a crash sensor (1) delivers a crash signal (a),
    - in which a first crash variable (AAA) derived from the crash signal is compared with a first firing threshold (th1a, th1b, th1c),
    - in which a second crash variable (wj, wv, ws) derived from the crash signal (a) is compared with a second firing threshold (th2a, th2b, th2c), and
    - in which the occupant protection means is controlled depending on whether the first and second firing threshold (th1a, th1b, th1c, th2a, th2b, th2c) are exceeded, and
    - in which the first crash variable (AAA) is derived from the absolute amount of the crash signal (a),

    **characterised in that**
    the second crash variable (wj) is formed from a sum of a number of difference terms of two respective chronologically consecutive digital values (AAA$_i$) of the first crash variable (AAA), preferably in accordance with the following formula:

$$(2) \quad wj(t_n, b) = \sum_{i=n-b}^{n} \left( AAA_i(t_i, b) - AAA_{i-1}(t_{i-1}, b) \right).$$

    where $t_n$ is the time of determination of the first crash variable (AAA), b+1 is the number of the sum terms, i is a sum index for the summation of i = n-b to n.

2. Method in accordance with claim 1,
    **characterised in that**
    the first crash variable (AAA) is derived from an integral of the absolute amount of the crash signal (a) over a restricted period of time, preferably from the sum of chronologically consecutive digital values (a$_i$) of the absolute amount of the crash signal (a) in accordance with the following formula:

$$(1) \quad AAA(t_n, b) = \frac{1}{b} \sum_{i=n-b}^{n} |a_i(t_i)| \cdot 1ms,$$

    where $t_n$ is the time of determination of the first crash variable (AAA), b+1 is the number of the sum terms, i is a sum index for the summation of i = n-b to n and ms stands for the physical unit milliseconds.

**3.** Method in accordance with one of the claims 1 or 2,
**characterised in that**
the first crash variable (AAA) is available as a lowpass-filtered digital value.

**4.** Device for controlling an occupant protection means in a motor vehicle in accordance with one of the above methods, with

- an acceleration sensor (1) to capture accelerations during a motor vehicle crash,
- a number of acceleration signal processing units (2, 3), linked to the acceleration sensor (1) for conversion of the acceleration signal (a) generated by the acceleration sensor (a) into a number of crash variables (AAA, wj; wv, ws),
- an evaluation unit (4) connected to the signal output (22, 32) of each of the acceleration signal processing units (2,3), for evaluation of the crash variables (AAA, wj; wv, ws) fed to it and for output of a firing signal to an activation unit (5) of the occupant protection means, if at least two crash variables (AAA, wj; wv, ws) exceed a firing threshold (th1a,th1b,th1c, th2a,th2b,th2c) in each case, whereby
- a first acceleration signal processing unit (2) features an absolute value generator (6) in each case, to which the acceleration signal (a) is fed on the input side and at the signal output (62) of which an absolute amount of the captured acceleration signal (a) is present,
- the signal output (62) of the absolute value generator (6) is fed to the signal output (22) of the first acceleration signal processing unit (2),
- the first crash variable (AAA) is available at the signal output (22) of the first acceleration signal processing unit (2) and
- the acceleration signal (a) of the acceleration sensor (1) is connected to the signal input (31) of a second acceleration signal processing unit (3), at the signal output (32) of which a second crash variable (wj; wv, ws) derived from the acceleration signal (a) is present, which is fed to a second signal input (42) of the evaluation unit (4).

**characterised in that**

- the second acceleration signal processing unit (3) features a delay element (8) and further a logical addition/ subtraction unit (9) with a first, second and third signal input (91, 92, 93),
- the first crash variable (AAA) is applied directly to the signal input (81) of the delay element (8),
- the signal output (82) of the delay element (8) is connected to the first signal input (91) of the addition/subtraction unit (9),
- the second crash variable (AAA) is applied directly to the second signal input (92) of the addition/subtraction unit (9), and
- the signal output (94) of the addition/subtraction unit (9) is connected both to the signal output (32) of the second acceleration signal processing unit (3) and also to the third signal input of the (93) addition/subtraction unit (9),

so that at the signal output (32) of the second acceleration signal processing unit (3) the second crash variable (wj) is available as a sum of a number of difference terms of two chronologically consecutive digital values (AAA$_i$) of the first crash variable (AAA) in each case, preferably in accordance with the formula

$$(2) \quad wj(t_n,b) = \sum_{i=n-b}^{n}\left(AAA_i(t_i,b) - AAA_{i-1}(t_{i-1},b)\right).$$

**Revendications**

**1.** Procédé de commande d'un moyen de protection des occupants d'un véhicule,

- dans lequel un capteur d'accélération (1) délivre un signal d'accélération (a),
- dans lequel une première grandeur de collision (AAA) déduite du signal d'accélération est comparée à un premier seuil de déclenchement (th1a, th1b, th1c),

- dans lequel une deuxième grandeur de collision (wj, wv, ws) déduite du signal d'accélération (a) est comparée à un deuxième seuil de déclenchement (th2a, th2b, th2c),
- dans lequel le moyen de protection des occupants est commandé en fonction du dépassement du premier et du deuxième seuils de déclenchement (th1a, th1b, th1c, th2a, th2b, th2c), et
- dans lequel la première grandeur de collision (AAA) est déduite de la valeur absolue du signal d'accélération (a),

**caractérisé en ce que**
la deuxième grandeur de collision (wj) est formée à partir d'une somme de plusieurs termes différentiels, composés chacun de deux valeurs numériques (AAA$_i$) temporellement successives de la première grandeur de collision (AAA), de préférence conformément à la formule suivante :

$$(2) \qquad wj(t_n, b) = \sum_{i=n-b}^{n} \big( AAA_i(t_i, b) - AAA_{i-1}(t_{i-1}, b) \big).$$

où $t_n$ est le moment de détermination de la première grandeur de collision (AAA), b+1 le nombre des termes de la somme, i un indice de sommation pour la formation de somme de i = n - b à n.

2. Procédé selon la revendication 1,
   **caractérisé en ce que**
   la première grandeur de collision (AAA) est déduite d'une intégrale de la valeur absolue du signal de collision (a) pendant une période délimitée, de préférence d'une somme de valeurs numériques (a$_i$) temporellement successives de la valeur absolue du signal de collision (a) conformément à la formule suivante :

$$(1) \qquad AAA(t_n, b) = \frac{1}{b} \sum_{i=n-b}^{n} |a_i(t_i)| \cdot 1ms \,,$$

où $t_n$ est le moment de détermination de la première grandeur de collision (AAA), b+1 le nombre des termes de la somme, i un indice de sommation pour la formation de somme de i = n - b à n, et où ms représente l'unité physique d'une milliseconde.

3. Procédé selon l'une des revendications 1 et 2,
   **caractérisé en ce que**
   la première grandeur de collision (AAA) se présente sous forme de valeur numérique filtrée passe-bas.

4. Dispositif de commande d'un moyen de protection des occupants d'un véhicule selon l'un des procédés susmentionnés, comprenant

   - un capteur d'accélération (1) pour la saisie d'accélérations lors d'une collision du véhicule,
   - plusieurs unités de traitement du signal d'accélération (2, 3) reliées au capteur d'accélération (1), pour la conversion du signal d'accélération (a) généré par le capteur d'accélération (1) en plusieurs grandeurs de collision (AAA, wj ; wv, ws),
   - une unité d'évaluation (4) reliée à la sortie de signaux (22, 32) de chacune des unités de traitement du signal d'accélération (2, 3), pour l'analyse des grandeurs de collision (AAA, wj ; wv, ws) qui lui sont délivrées et pour l'émission d'un signal de déclenchement vers une unité de déclenchement (5) du moyen de protection des occupants, si au moins deux grandeurs de collision (AAA, wj ; wv, ws) dépassent un seuil de déclenchement correspondant (th1a, th1b, th1c, th2a, th2b, th2c), où
   - une première unité de traitement du signal d'accélération (2) comporte une unité de formation de valeur absolue (6), à laquelle le signal d'accélération (a) est délivré côté entrée et à la sortie de signaux (62) de laquelle est présentée une valeur absolue du signal d'accélération (a) saisi,
   - la sortie de signaux (62) de l'unité de formation de valeur absolue (6) est adressée à la sortie de signaux (22) de la première unité de traitement du signal d'accélération (2),
   - la première grandeur de collision (AAA) est rendue disponible à la sortie de signaux (22) de la première unité de traitement du signal d'accélération (2), et
   - le signal d'accélération (a) du capteur d'accélération (1) est relié l'entrée de signaux (31) d'une deuxième unité de traitement du signal d'accélération (3), à la sortie de signaux (32) de laquelle est présentée une deuxième grandeur de collision (wj ; wv, ws) déduite du signal d'accélération (a) et délivrée à une deuxième entrée de signaux (42) de l'unité d'évaluation (4),

**caractérisé en ce que**
la deuxième unité de traitement du signal d'accélération (3) comporte un élément de temporisation (8) ainsi qu'une unité logique d'addition/soustraction (9) avec une première, une deuxième et une troisième entrée de signaux (91, 92, 93),

- la première grandeur de collision (AAA) est directement appliquée sur l'entrée de signaux (81) de l'élément de temporisation (8),
- la sortie de signaux (82) de l'élément de temporisation (8) est reliée à la première entrée de signaux (91) de l'unité d'addition/soustraction (9),
- la première grandeur de collision (AAA) est directement appliquée sur la deuxième entrée de signaux (92) de l'unité d'addition/soustraction (9), et
- la sortie de signaux (94) de l'unité d'addition/soustraction (9) est reliée à la sortie de signaux (32) de la deuxième unité de traitement du signal d'accélération (3) ainsi qu'à la troisième entrée de signaux (93) de l'unité d'addition/soustraction (9),

de telle sorte qu'à la sortie de signaux (32) de la deuxième unité de traitement du signal d'accélération (3) la deuxième grandeur de collision (wj) est rendue disponible en tant que somme de plusieurs termes différentiels, composés chacun de deux valeurs numériques ($AAA_i$) temporellement successives de la première grandeur de collision (AAA), de préférence conformément à la formule suivante :

$$(2) \quad wj(t_n, b) = \sum_{i=n-b}^{n} \left( AAA_i(t_i, b) - AAA_{i-1}(t_{i-1}, b) \right).$$

FIG 1

## FIG 2

## FIG 3

FIG 4

FIG 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5935182 A
- DE 19534760 A1
- WO 0214113 A1
- US 6036225 A